# EUROPEAN PATENT APPLICATION

(11) **EP 2 814 185 A1**
(43) Date of publication of application: **17.12.2014**
(21) Application number: 13198713.3
(22) Date of filing: 20.12.2013
(51) Int. Cl.: H04B 3/54

(54) **Method and apparatus for routing power line communication**

(30) Priority: 13.06.2013 CN 201310237977
(71) Applicant: Delta Electronics, Inc., Chungli City, Taoyuan County 32063 (TW)
(72) Inventor: Li, Sheng-Hua, 32063 Chungli City, Taoyuan County (TW)
(74) Representative: Ter Meer Steinmeister & Partner

(57) **Abstract**

A power line communication (PLC) routing system includes a plurality of micro inverters (1) and a data collection apparatus (6) connected to the micro inverters (1) through a power line (4). After being installed in the building, the micro inverters (1) are registered to the data collection apparatus (6). When submitting a connection request to the micro inverters (1) but cannot receive the corresponding response, the data collection apparatus (6) commands a micro inverter (1) which has responded the request to transmit the request to another micro inverter (1) which is out of time to response, and re-transmits data from the another micro inverter (1) to the data collection apparatus (6).

## Description

### BACKGROUND

### 1. Technical Field

The present disclosure relates generally to a power line communication system, and more particularly to a power line communication routing system and a method of operating the same.

### 2. Description of Related Art

In general, the solar power system outputs the electricity generated from the solar panels through the power line. Also, additional data transmission lines connected to the solar panels are used to transmit the data of the solar panels, such as the total power generating capacity or power generating efficiency of the solar panels.

Because the solar panels are usually installed outdoors to achieve the optimal rate of receiving light sources, the above-mentioned data transmission lines would inevitably expose outside the building. The heat-resistant and water-proof materials are appropriate for the data transmission lines in order to provide better transmission quality through the data transmission lines, however, that increases the costs of the solar power system. In addition, it is not easy to store the superfluous data transmission lines and it is not good looking.

Today an improved solar power system is implemented by using the power line communication (PLC) technology to output the electricity generated from the solar panels and the data of the solar panels.

However, the same power line is usually connected to different large electrical apparatuses, such as the refrigerator, air conditioner, television, washing machine, computer, and so on. Once the length of the power line is too long, the amount of the electrical apparatuses connected to the power line is too much, or the unstable voltage caused by the old electrical apparatuses, it is easy to cause the harmonic pollution in the power line so that the solar panels cannot correctly communicate with external apparatuses and transmit data to each other. Also, the transmitted data are distorted because of the harmonic pollution even if the solar panels can correctly transmit data through the power line.

### SUMMARY

An object of the present disclosure is to provide a power line communication routing system and a method of operating the same that can overcome problems of incorrect commands and data transmission due to the too far distance or too much interference when a power line is provided to simultaneously transmit electricity, commands, and data.

In order to achieve the above-mentioned object, a power line communication (PLC) routing system is provided; the PLC routing system includes a plurality of micro inverters and a data collection apparatus. The micro inverters are connected to the data collection apparatus through the power line to transmit electricity, commands, and data. After the micro inverters are installed in a building, the micro inverters register to the data collection apparatus. When the data collection apparatus submits a connection request to the micro inverters and cannot acquire the corresponding responses, the data collection apparatus commands the micro inverter which has received the response to submit the request instead of the micro inverter which does not reply the response within a timeout period. The micro inverter transmits the response to the data collection apparatus after receiving the replied data.

As mentioned above, the data collection apparatus cannot communicate with the micro inverters through the power line when too far distance between the micro inverter and the data collection apparatus or too much interference, such as the harmonic pollution generated due to excessive electrical apparatuses. The present disclosure has following features and advantages. The micro inverters connected to the power line can communicate to each other so that another micro inverter can be used to submit the request once the data collection apparatus cannot communicate with one of the micro inverters. Accordingly, the data collection apparatus can continuously submit the request to the micro inverter and normally receives the data replied from the micro inverter when the data collection apparatus cannot directly communicate with the micro inverter.

In other words, the PLC routing system and the method are provided to overcome problems of incorrect commands and data transmission due to the too far distance or too much interference when a power line is provided to simultaneously transmit electricity, commands, and data.

It is to be understood that both the foregoing general description and the following detailed description are exemplary, and are intended to provide further explanation of the present disclosure as claimed. Other advantages and features of the present disclosure will be apparent from the following description, drawings and claims.

### BRIEF DESCRIPTION OF DRAWINGs

The features of the present disclosure believed to be novel are set forth with particularity in the appended claims. The present disclosure itself, however, may be best understood by reference to the following detailed description of the present disclosure, which describes an exemplary embodiment of the present disclosure, taken in conjunction with the accompanying drawings, in which:
Fig. 1 is an architecture block diagram of a power line communication (PLC) routing system according to a first embodiment of the present disclosure;
Fig. 2 is a schematic view of a first inquiry action according to the first embodiment of the present disclosure;
Fig. 3 is a schematic view of a second inquiry action according to the first embodiment of the present disclosure;
Fig. 4 is a flowchart of the inquiry action according to the first embodiment of the present disclosure;
Fig. 5 is a schematic view of a third inquiry action according to the first embodiment of the present disclosure;
Fig. 6 is a block diagram of a DC-to-AC converter according to a first embodiment of the present disclosure;
Fig. 7 is a block diagram of a data collection apparatus according to a first embodiment of the present disclosure;
Fig. 8 is a flowchart of installing a micro inverter according to a first embodiment of the present disclosure;
Fig. 9 is a flowchart of the inquiry action according to a second embodiment of the present disclosure;
Fig. 10 is a flowchart of the inquiry action according to a third embodiment of the present disclosure;
Fig. 11 is a flowchart of data collection according to a first embodiment of the present disclosure; and
Fig. 12 is a flowchart of data collection according to a second embodiment of the present disclosure.

### DETAILED DESCRIPTION

Reference will now be made to the drawing figures to describe the present invention in detail.

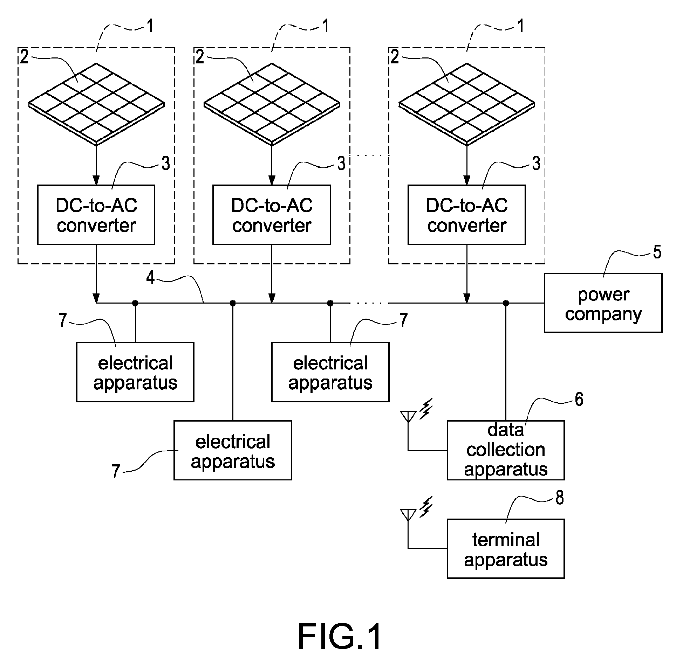

Reference is made to Fig. 1 which is an architecture block diagram of a power line communication (PLC) routing system according to a first embodiment of the present disclosure. The PLC routing system mainly includes a plurality of micro inverters 1, a power line 4, and a data collection apparatus 6. The micro inverters 1 are connected to the data collection apparatus 6 through the power line 4 so as to transmit electricity, commands, and data. In this embodiment, the power line 4 is a grid or an AC bus. However, the embodiment is only exemplified but is not intended to limit the scope of the disclosure.

The PLC routing system is constructed in a building, such as a house. Each of the micro inverters 1 has a solar panel 2 and a DC-to-AC converter 3 electrically connected to the solar panel 2. The solar panel 2 is usually installed on the building roof to receive external light source and generate a DC power. The DC-to-AC converter 3 receives the DC power generated from the solar panel 2 and converts the DC power into an AC power, and the AC power is outputted through the power line 4. Generally, all of the micro inverters 1 are connected to the power line 4, and the power line 4 is connected to a power company 5 so that the redundant AC power outputted from the micro inverters 1 can be fed back and sold to the power company 5 through the power line 4.

The data collection apparatus 6 submits a connection request to the micro inverts 1 to confirm operation conditions of the micro inverters 1 through the power line 4. In addition, the data collection apparatus 6 also submits a data request to the micro inverters 1 so that the micro inverters 1 can reply the corresponding data, such as the total power generating capacity or power generating efficiency of the solar panel 2 to the data collection apparatus 6.

The micro inverters 1 are connected to the power line 4 in the building, that is, the micro inverters 1 are connected to the same power line 4 which is also connected to one or more electrical apparatuses 7, such as the refrigerator, air conditioner, television, computer, and so on. The data collection apparatus 6 cannot correctly communicate with the micro inverters 1 when the too far distance between the data collection apparatus 6 and the micro inverters 1 or the too much interference in the power line 4, such as the harmonic pollution generated due to excessive electrical apparatuses 7.

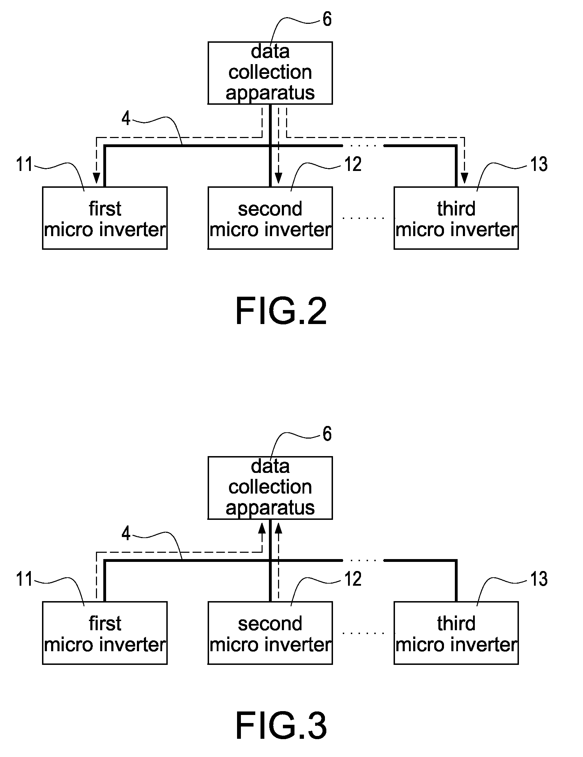

Reference is made to Fig. 2 and Fig. 3 which are schematic views of a first inquiry action and a second inquiry action according to the first embodiment of the present disclosure, respectively. In this embodiment, the number of the micro inverters 1 is three, namely, a first micro inverter 11, a second micro inverter 12, and a third micro inverter 13, but not limited. As mentioned above, the first micro inverter 11 has a first solar panel, the second micro inverter 12 has a second solar panel, and the third micro inverter 13 has a third solar panel. Also, the first solar panel, the second solar panel, and the third solar panel are connected to the power line 4 through a first DC-to-AC converter, a second DC-to-AC converter, and a third DC-to-AC converter, respectively. However, the embodiments are only exemplified but are not intended to limit the scope of the disclosure.

As shown in Fig. 2, the data collection apparatus 6 submits a request to the first, second, and third micro inverters 11, 12, 13 when data collection apparatus 6 wants to confirm operation conditions or collect relevant data of the first, second, and third micro inverters 11, 12, 13. As mentioned above, the data collection apparatus 6 cannot correctly communicate with the third micro inverter 13 because of the too far distance between the data collection apparatus 6 and the third micro inverters 13 or the too much interference in the power line 4. In this embodiment, even if the third micro inverter 13 is not faulted, the third micro inverter 13 still cannot correctly receive the request submitted from the data collection apparatus 6 because of above-mentioned problems.

When the above-mentioned problem occurs, the third micro inverter 13 would miss the request submitted from the data collection apparatus 6 so that there will be no response transmitted from the third micro inverter 13 to the data collection apparatus 6. In this embodiment, the data collection apparatus 6 can correctly receive the responses transmitted from the first micro inverter 11 and the second micro inverter 12, but the third micro inverter 13 does not reply the response within a timeout period. Thereinafter, a simple embodiment is exemplified for further demonstration.

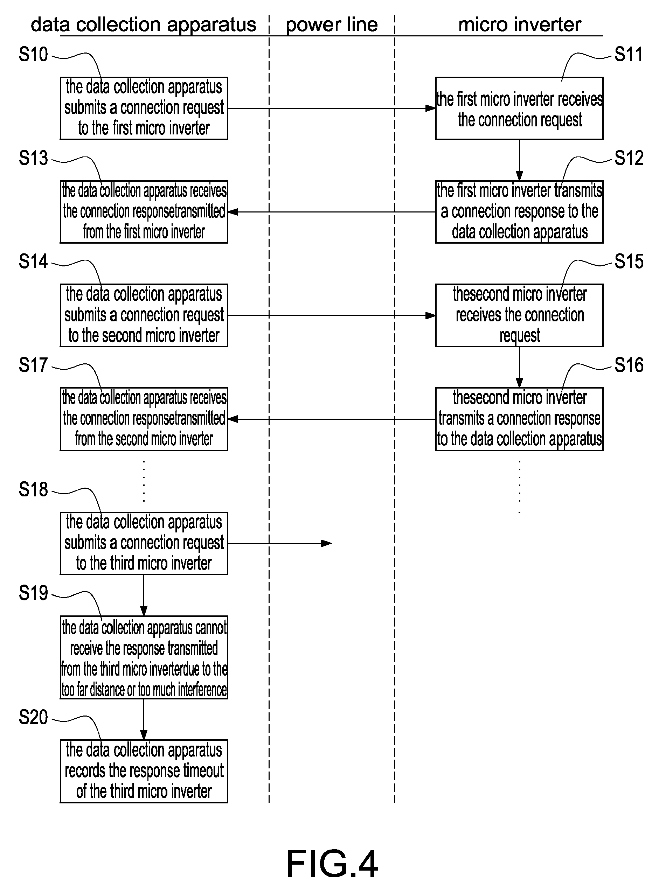

Reference is made to Fig. 4 which is a flowchart of the inquiry action according to the first embodiment of the present disclosure. The data collection apparatus 6 can sequentially or randomly submits the connection request to the first, second, and third micro inverters 11, 12, 13 when data collection apparatus 6 wants to confirm operation conditions or collect relevant data of the first, second, and third micro inverters 11, 12, 13.

First, the data collection apparatus 6 submits a connection request to the first micro inverter 11 through the power line 4 (S10). When the first micro inverter 11 correctly receives the connection request (S11), the first micro inverter 11 transmits a connection response to the data collection apparatus 6 through the power line 4 (S12), and then the data collection apparatus 6 receives the connection response transmitted from the first micro inverter 11 through the power line 4 (S13).

Afterward, the data collection apparatus 6 submits a connection request to the second micro inverter 12 through the power line 4 (S14). When the second micro inverter 12 correctly receives the connection request (S15), the second micro inverter 12 transmits a connection response to the data collection apparatus 6 through the power line 4 (S16), and then the data collection apparatus 6 receives the connection response transmitted from the second micro inverter 12 through the power line 4 (S17). Afterward, the data collection apparatus 6 submits a connection request to the third micro inverter 13 through the power line 4 (S18). However, the data collection apparatus 6 cannot receive the response transmitted from the third micro inverter 13 because of the above-mentioned problems of incorrect commands and data transmission due to the too far distance or too much interference (S19). Therefore, the data collection apparatus 6 records the response timeout of the third micro inverter 13 (S20). In this embodiment, the data collection apparatus 6 regards the third micro inverter 13 as the first-type micro inverter when the response time of the third micro inverter exceeds a determined time.

In this embodiment, because the first-type micro inverters are the micro inverters that cannot normally communicate with the data collection apparatus 6 due to the above-mentioned problems, the first-type micro inverters are probably faulted or in normal operation.

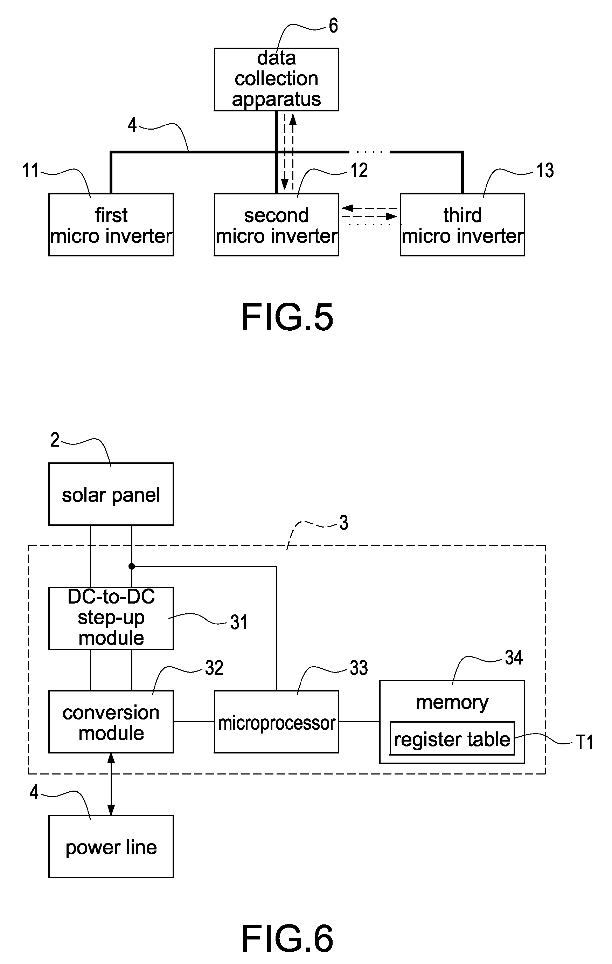

Reference is made to Fig. 5 which is a schematic view of a third inquiry action according to the first embodiment of the present disclosure. The data collection apparatus 6 regards the micro inverter that can normally and correctly communicate with the data collection apparatus 6 and reply the connection request as a second-type micro inverter. The data collection apparatus 6 commands the second-type micro inverter to submit the connection request instead of the first-type micro inverter. As shown in Fig. 5, because the second micro inverter 12 has responded the connection request submitted from the data collection apparatus 6, the data collection apparatus 6 regards the second micro inverter 12 as the second-type micro inverter. The data collection apparatus 6 commands the second micro inverter 12 to submit the connection request instead of the third micro inverter 13, receives the response of the third micro inverter 13, and transmits the response to the data collection apparatus 6.

Generally, a distance between any two micro inverters is less than a distance between the data collection apparatus 6 and the first-type micro inverter. That is, a distance between the second-type micro inverter and the first-type micro inverter is less than a distance between the data collection apparatus 6 and the first-type micro inverter.

In this embodiment, the data collection apparatus 6 can give priority to select the micro inverter that is near the first-type micro inverter within a predetermined distance and can normally communicate with the data collection apparatus 6 as the second-type micro inverter. In the preferred embodiment, the second-type micro inverter is adjacent to the first-type micro inverter, but not limited. Especially, the data collection apparatus 6 can judge the distance between the first-type micro inverter and the second-type micro inverter or judge whether the second-type micro inverter is adjacent to the first-type micro inverter according to the media access control address (MAC Address), the serial number (SN), the personal identification number (PIN), the internet protocol address (IP Address), or so on. However, the embodiment is only exemplified but is not intended to limit the scope of the disclosure.

Accordingly, the second-type micro inverter plays a role of a relay apparatus between the data collection apparatus 6 and the first-type micro inverter so as to reduce the distance between the first-type micro inverter and data collection apparatus 6, thus increasing probability of correctly receiving the connection request of the first-type micro inverter.

In another embodiment, when the data collection apparatus 6 submits the data requires to the micro inverters 1, the first-type micro inverter cannot correctly receive the data request submitted from the data collection apparatus 6. Therefore, the data collection apparatus 6 is connected to the second-type micro inverter which is adjacent or closer to the first-type micro inverter, and the data collection apparatus 6 commands the second-type micro inverter to submit the data request instead of the first-type micro inverter, also transmits the data replied from the first-type micro inverter to the data collection apparatus 6. Simultaneously, the second-type micro inverter can directly reply the corresponding data to the data collection apparatus 6 because the second-type micro inverter can correctly receive the data request submitted from the data collection apparatus 6.

Reference is made to Fig. 6 which is a block diagram of a DC-to-AC converter according to a first embodiment of the present disclosure. Each of the micro inverters 1 includes the solar panel 2 and the DC-to-AC converter 3. As shown in Fig. 6, the DC-to-AC converter 3 has a DC-to-DC step-up module 31, a conversion module 32, a microprocessor 33, and a memory 34.

The conversion module 32 is connected to the solar panel 2 and the power line 4. The solar panel 2 generates the DC power to the DC-to-AC converter 3. The DC-to-AC converter 3 receives the DC power generated from the solar panel 2 via the conversion module 32 and converts the DC power into the AC power, and the AC power is outputted through the power line 4. The AC power can supply power to the electrical apparatuses 7 connected to the power line 4, and also the redundant AC power can be fed back and sold to the power company 5.

The DC-to-DC step-up module 31 electrically connected between the solar panel 2 and the conversion module 32. The DC-to-DC step-up module 31 receives the DC power generated from the solar panel 2 and boosts the DC power, and the boosted DC power is outputted to the conversion module 32 to be converted into the AC power by the conversion module 32. However, the DC-to-DC step-up module 31 is not necessary to be used depending on the actual demands.

The microprocessor 33 is electrically connected to the conversion module 32 and the solar panel 2. The microprocessor 33 receives the request transmitted from the power line 4 and via the conversion module 32. In particular, the request is submitted from the data collection apparatus 6 or the second-type micro inverter through the power lien 4. After receiving the request, the microprocessor 33 executes the corresponding action according to the request, such as the inquiry of the total power generating capacity or the power generating efficiency of the solar panel 2. In addition, the inquired data are replied to the data collection apparatus 6 or the second-type micro inverter.

The memory 34 is electrically connected to the microprocessor 33 and has a register table T1 therein. Each of the micro inverters 1 has to register to the data collection apparatus 6 when the micro inverter is initially installed in the building so that the data collection apparatus 6 realizes the total number of the micro inverters 1 installed in the building. The second-type micro inverter can inquire the register table T1 to communicate with the data collection apparatus 6 according to the information of the first-type micro inverter when the second-type micro inverter receives the command transmitted from the data collection apparatus 6.

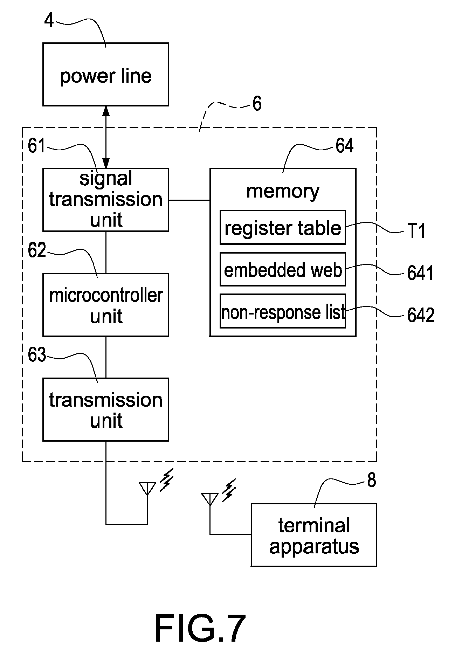

Reference is made to Fig. 7 which is a block diagram of a data collection apparatus according to a first embodiment of the present disclosure. In this embodiment, the data collection apparatus 6 mainly includes a signal transmission unit 61, a microcontroller unit 62, a transmission unit 63, and a memory 64. The signal transmission unit 61 is provided to connect to the power line 4 so that the data collection apparatus 6 submits the request to the micro inverters 1 and receives the response transmitted from the micro inverters 1 through the power line 4.

The microcontroller unit 62 is electrically connected to the signal transmission unit 61 to control the data collection apparatus producing and submitting the request, and also process the data received by the signal transmission unit 61. In this embodiment, the microcontroller unit 62 can produce and submit the request to provide the total power generating capacity or the power generating efficiency according to setting values or the operation of the administrator.

The transmission unit 63 is electrically connected to the microcontroller unit 62, and the data collection apparatus 6 is externally connected to a terminal apparatus 8 through the transmission unit 63. In this embodiment as shown in Fig. 7, the transmission unit 63 is wirelessly connected to the terminal apparatus 8. However, the embodiment is only exemplified but is not intended to limit the scope of the disclosure, that is, the transmission unit 63 can be also physically (wirely) connected to the terminal apparatus 8. The terminal apparatus 8 can be a wireless access point (AP) so that the data collection apparatus 6 can be connected to the terminal apparatus 8 through the transmission unit 63, and connected to a network through the terminal apparatus 8. Accordingly, the administrator can operate the data collection apparatus 6 through the network so as to register the micro inverters 1 to the data collection apparatus 6, enable the data collection apparatus 6 to submit the request, and access the collected data by the data collection apparatus 6.

The memory 64 is electrically connected to the microcontroller unit 62, and the memory 64 is provided to store the inquired data replied from the micro inverters 1. In addition, the memory 64 has an embedded web 641. The embedded web 641 is provided to receive the login information of the administrator when the administrator uses the computer to connect to the data collection apparatus 6 through the network so that the administrator can operate the embedded web 641 to register the micro inverters 1. The data collection apparatus 6 provides the register table T1 according to the registered results and the register table T1 is stored in the memory 64.

Especially, after the register table T1 in the memory 64 is established in the data collection apparatus 6, the register table T1 is transmitted to the micro inverters 1 through the power line 4 and stored in the memory 34 of the DC-to-AC converter 3. Accordingly, the second-type micro inverter instead of the data collection apparatus 6 can inquire the information of the first-type micro inverter and communicate with the first-type micro inverter according to the register table T1 therein.

In particular, when the administrator registers the micro inverters 1, the media access control address (MAC Address), the serial number (SN), the personal identification number (PIN), the internet protocol address (IP Address), or so on are recorded in the data collection apparatus 6 so that the data collection apparatus 6 can produce the register table T1 according the recorded information. Accordingly, the data collection apparatus 6 can realize that the amount of the micro inverters 1 connected to the power line 4, where the micro inverters 1 are located, and how to connect to and communicate with the micro inverters 1 by inquiring the register table T1.

As mentioned above, the information of the first-type micro inverter, such as the MAC Address, the SN, the PIN, the IP Address, or so on is recorded to produce a non-response list 642. The non-response list 642 is stored in the memory 64. The data collection apparatus 6 can inquire the non-response list 642 to judge which micro inverters 1 are the first-type micro inverter. Accordingly, it is to determine whether the second-type micro inverter needs to be used to submit the data request or not.

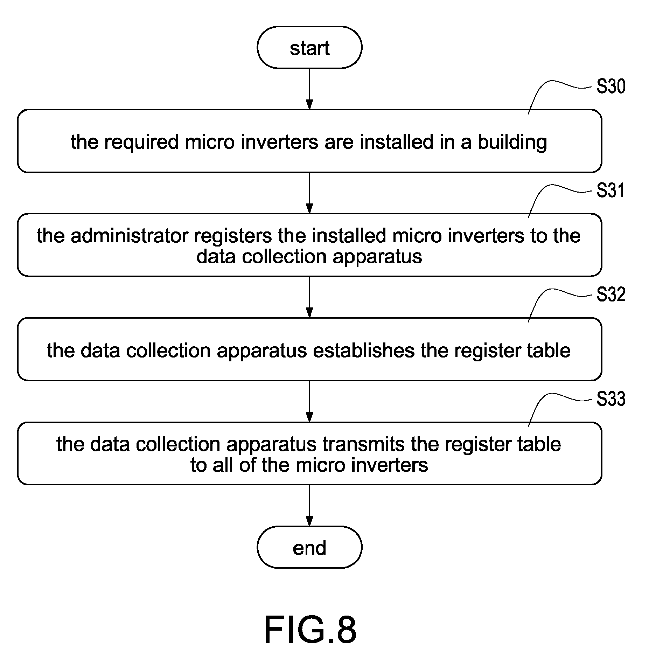

Reference is made to Fig. 8 which is a flowchart of installing a micro inverter according to a first embodiment of the present disclosure. First, the required micro inverters 1 are installed in a building (S30), that is the corresponding solar panels 2 and DC-to-AC converters 3 are installed.

Afterward, the administrator registers the installed micro inverters 1 to the data collection apparatus 6 (S31) so that the data collection apparatus 6 realizes the information of the all micro inverters 1 installed in the building. According to the registered results, the data collection apparatus 6 establishes the register table T1 (S32) and stores the register table T1. Afterward, the data collection apparatus 6 transmits the register table T1 to all of the micro inverters 1 (S33). Accordingly, the data collection apparatus 6 can realize that the amount of the micro inverters 1 connected to the power line 4 by inquiring the register table T1. In addition, the micro inverters 1 can communicate to each other according to the recorded information of the register table T1.

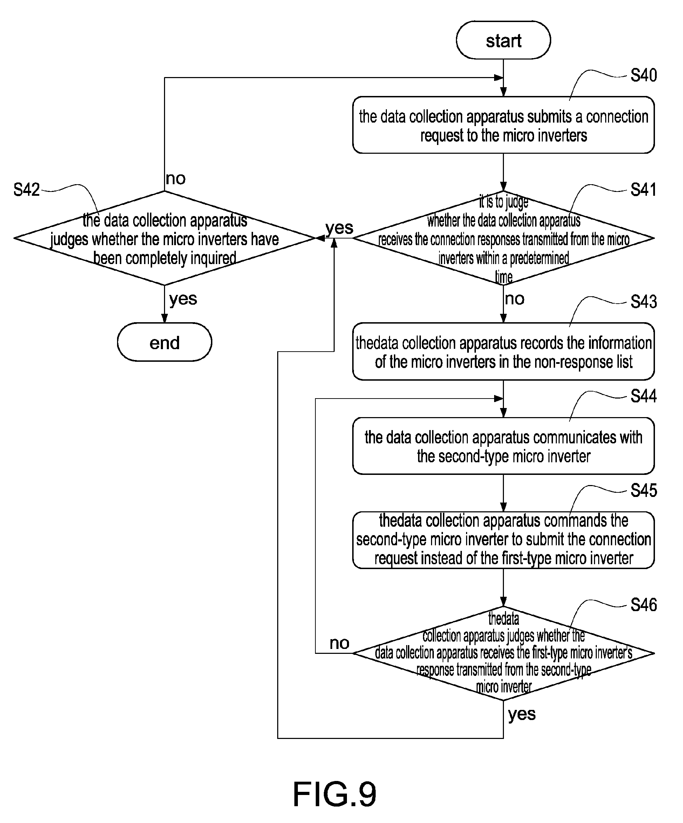

Reference is made to Fig. 9 which is a flowchart of the inquiry action according to a second embodiment of the present disclosure. When the register process is successfully completed, the data collection apparatus 6 can submit a connection request to the micro inverters 1 through the power line 4 (S40) to confirm operation conditions of the micro inverters 1. Afterward, it is to judge whether the data collection apparatus 6 receives the connection responses transmitted from the micro inverters 1 within a predetermined time (S41). If the data collection apparatus 6 receives the connection responses transmitted from the micro inverters 1 within a predetermined time, the micro inverters 1 are regarded as the second-type micro inverters. Afterward, the data collection apparatus 6 judges whether the micro inverters have been completely inquired (S42). If the micro inverters have not been completely inquired, the step (S40) is re-executed to submit another connection request to another micro inverter 1.

On the contrary, If the data collection apparatus 6 does not receive the connection responses transmitted from the micro inverters 1 within the predetermined time, the micro inverters 1 are regarded as the first-type micro inverters. The data collection apparatus 6 can record the information of the micro inverters 1 in the non-response list 642 (S43). Afterward, the data collection apparatus 6 communicates with the second-type micro inverter that is one of the micro inverters 1 (S44), and commands the second-type micro inverter to submit the connection request instead of the first-type micro inverter (S45). Finally, the second-type micro inverter is provided to receive the response transmitted from the first-type micro inverter, and transmit the received response to the data collection apparatus 6.

The data collection apparatus 6 judges whether the data collection apparatus 6 receives the first-type micro inverter's response transmitted from the second-type micro inverter (S46). If the data collection apparatus 6 receives the first-type micro inverter's response transmitted from the second-type micro inverter, the data collection apparatus 6 continues commanding the second-type micro inverter to submit the connection request to another micro inverter 1. If the data collection apparatus 6 does not receive the first-type micro inverter's response transmitted from the second-type micro inverter, the step (S44) is re-executed because the second-type micro inverter cannot communicate with the first-type micro inverter, that is, the data collection apparatus 6 searches another second-type micro inverter to re-submit the connection request to the first-type micro inverter. In another embodiment, the data collection apparatus 6 can judge that the first-type micro inverter is faulted when the second-type micro inverter does not receive the response transmitted from the first-type micro inverter within the determined time. Thereinafter, a simple embodiment is exemplified for further demonstration.

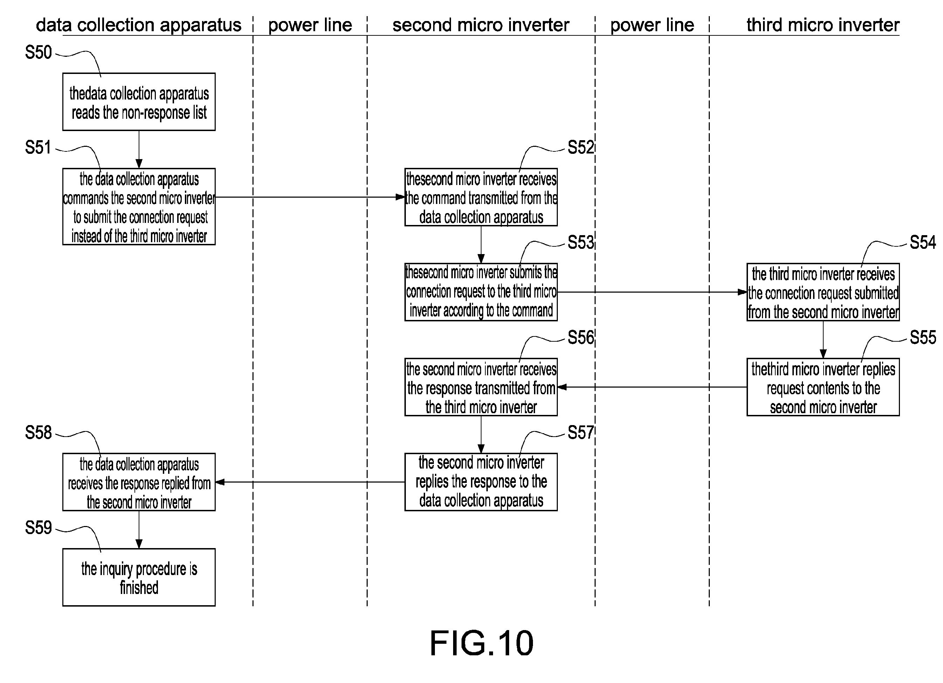

Reference is made to Fig. 10 which is a flowchart of the inquiry action according to a third embodiment of the present disclosure. The data collection apparatus 6 first reads the non-response list 642 (S50) and realizes that the third micro inverter 13 is the first-type micro inverter according to the non-response list 642. The data collection apparatus 6 commands the second micro inverter 12 to submit the connection request instead of the third micro inverter 13 (S51). In this embodiment, because the second micro inverter 12 has responded the connection request submitted from the data collection apparatus 6, the second micro inverter 12 is regarded as the second-type micro inverter.

The second micro inverter 12 receives the command transmitted from the data collection apparatus 6 (S52) and submits the connection request to the third micro inverter 13 according to the command (S53). After the third micro inverter 13 receives the connection request submitted from the second micro inverter 12 (S54), the third micro inverter 13 immediately replies the request contents to the second micro inverter 12 (S55). Afterward, the second micro inverter 12 receives the response transmitted from the third micro inverter 13 (S56) and replies the response to the data collection apparatus 6 (S57). After the data collection apparatus 6 receives the response replied from the second micro inverter 12 (S58), the inquiry procedure is finished (S59).

Especially, if the third micro inverter 13 cannot receive the connection request submitted from the second micro inverter 12, it indicates that too far distance or too much interference, such as the harmonic pollution generated due to excessive electrical apparatuses 7 is between the second micro inverter 12 and the third micro inverter 13. Once a timeout of replying the response to the data collection apparatus 6 occurs, the data collection apparatus 6 would search another second-type micro inverter to replace the second micro inverter 12 and communicate with the third micro inverter 13. In addition, the third micro inverter 13 is probably faulted when the second micro inverter 12 does not receive the response transmitted from the third micro inverter 13 after the second micro inverter 12 submits the connection require.

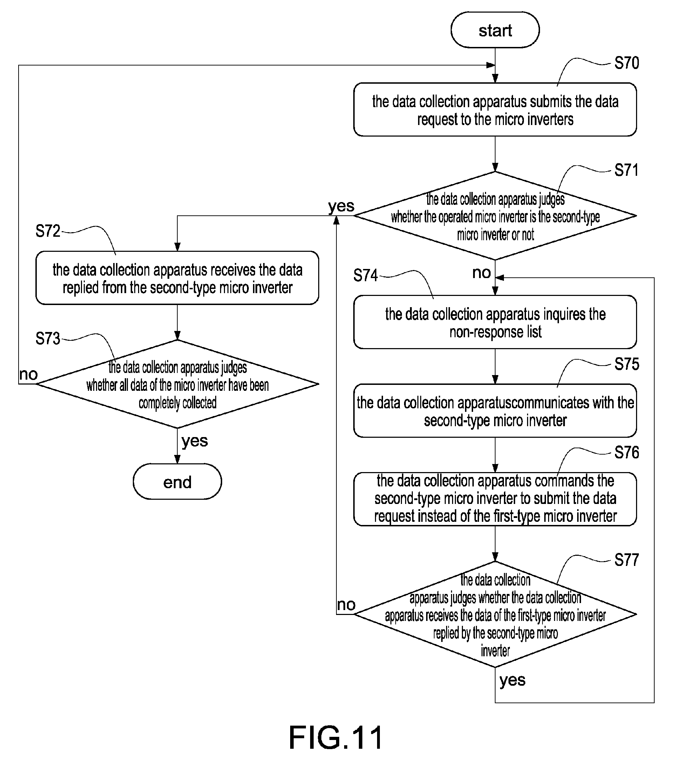

Reference is made to Fig. 11 which is a flowchart of data collection according to a first embodiment of the present disclosure. The data collection apparatus 6 can sequentially submits the data request to the micro inverters 1 after confirming conditions of the micro inverters 1 (S70) so as to collect the information of the total power generating capacity or the power generating efficiency of the solar panel 2.

Afterward, the data collection apparatus 6 judges whether the operated micro inverter 1 is the second-type micro inverter or not (S71) by inquiring the non-response list 642. If the operated micro inverter 1 is the second-type micro inverter, the data collection apparatus 6 directly receives the data replied from the second-type micro inverter through the power line 4 (S72). Afterward, the data collection apparatus 6 judges whether all data of the micro inverter 1 have been completely collected (S73). If all data of the micro inverter 1 have not been completely collected, the step (S70) is re-executed to submit another data request to the next micro inverter 1.

In the step (S71), if the operated micro inverter 1 is the first-type micro inverter, the data collection apparatus 6 inquires the non-response list 642 (S74) to search another second-type micro inverter and communicate with the second-type micro inverter (S75). Afterward, the data collection apparatus 6 commands the second-type micro inverter to submit the data request instead of the first-type micro inverter (S76).

After the step (S76), the data collection apparatus 6 judges whether the data collection apparatus 6 receives the data of the first-type micro inverter replied by the second-type micro inverter (S77). If the data collection apparatus 6 receives the data of the first-type micro inverter, the data collection apparatus 6 continues submitting the data request to another micro inverter 1. If the data collection apparatus 6 does not receive the data of the first-type micro inverter, the step (S74) is re-executed because the second-type micro inverter cannot communicate with the first-type micro inverter or the first-type micro inverter is faulted, that is, the data collection apparatus 6 searches another second-type micro inverter to re-submit the data request to the first-type micro inverter. Thereinafter, a simple embodiment is exemplified for further demonstration.

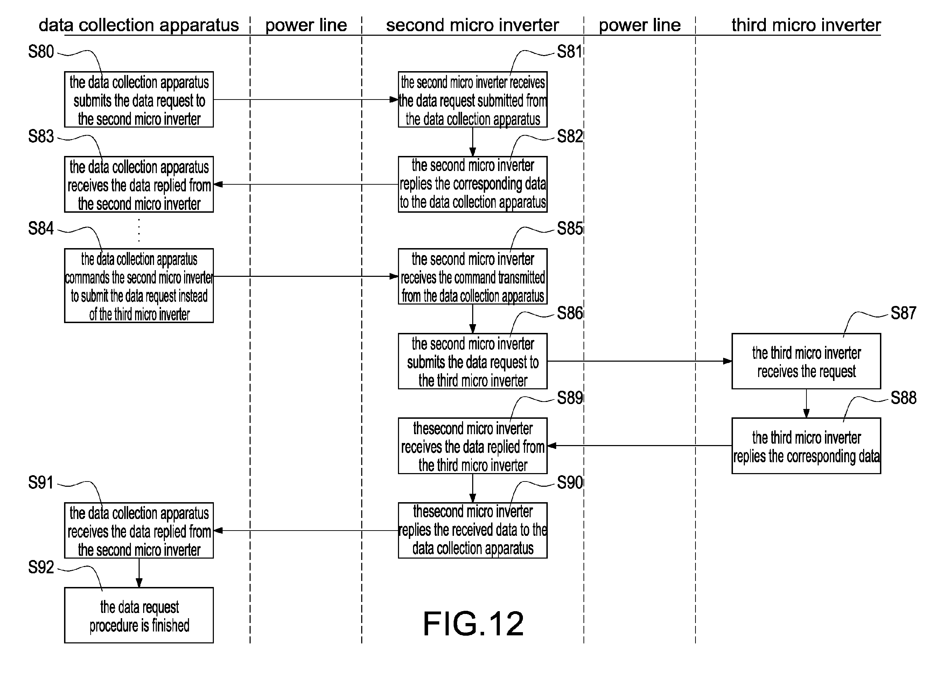

Reference is made to Fig. 12 which is a flowchart of data collection according to a second embodiment of the present disclosure. In this embodiment, the data collection apparatus 6 realizes that the second micro inverter 12 is the second-type micro inverter and the third micro inverter 13 is the first-type micro inverter according to the non-response list 642. First, the data collection apparatus 6 submits the data request to the second micro inverter 12 (S80). Afterward, the second micro inverter 12 receives the data request submitted from the data collection apparatus 6 (S81). In particular, before the step (S80), the data collection apparatus 6 has submitted the data request to the first micro inverter 11 and received the data replied from the first micro inverter 11, but not limited.

After receiving the data request, the second micro inverter 12 starts to collect and process data according to the request contents and replies the corresponding data to the data collection apparatus 6 through the power line 4 (S82). Afterward, the data collection apparatus 6 can receive the data replied from the second micro inverter 12 though the power line 4 (S83).

Because the third micro inverter 13 is regarded as the first-type micro inverter, the data collection apparatus 6 commands the second micro inverter 12 to submit the data request instead of the third micro inverter 13 (S84) when collecting the data of the third micro inverter 13. The second micro inverter 12 receives the command transmitted from the data collection apparatus 6 (S85) and submits the data request to the third micro inverter 13 according to the received command (S86). Afterward, the third micro inverter 13 receives the request through the power line (S87), collects and processes the corresponding data according to the request contents, and replies the collected and processed data to the second micro inverter 12 (S88).

The second micro inverter 12 receives the data replied from the third micro inverter 13 through the power line 4 (S89) and replies the received data to the data collection apparatus 6 instead of the third micro inverter 13 (S90). After the data collection apparatus 6 receives the data replied from the second micro inverter 12 (S91), the data request procedure is finished (S92).

In the present disclosure, the data collection apparatus 6 can search and find at least one second-type micro inverter to replace the first-type micro inverter that cannot communicate with the data collection apparatus 6 because of the too far distance or too much interference is between the data collection apparatus 6 and the first-type micro inverter. Accordingly, the second-type micro inverter adjacent or near the first-type micro inverter is provided to play a role of the relay apparatus between the data collection apparatus 6 and the first-type micro inverter so as to fully extend available distance of the power line 4, completely collect data of the all registered micro inverters 1, and significantly reduce the influence of the electrical apparatuses 7.

## Claims

1. A power line communication routing system comprising:
- a power line (4);
- a plurality of micro inverters (1) connected to the power line (4), each micro inverter (1) having a solar panel (2) and a DC-to-AC converter (3); the DC-to-AC converter (3) electrically connected to the solar panel (2) and the power line (4), and configured to output an AC power through the power line (4); and
- a data collection apparatus (6) connected to the power line (4), and configured to submit requests to the micro inverters (1) and receive responses transmitted from the micro inverters (1);
- wherein the data collection apparatus (6) is configured to regard the micro inverter (1) as a first-type micro inverter when the micro inverter (1) does not submit the response within a predetermined time, and command a second-type micro inverter of the micro inverters (1) to submit the request instead of the first-type micro inverter; the second-type micro inverter is configured to receive the data replied from the first-type micro inverter through the power line (4), and transmit the received data to the data collection apparatus (6) through the power line (4).

2. The power line communication routing system in claim 1, wherein the data collection apparatus (6) is configured to regard to micro inverter (1) that normally replies the request and is near the first-type micro inverter within a predetermined distance as the second-type micro inverter.

3. The power line communication routing system in claim 2, wherein the second-type micro inverter is adjacent to the first-type micro inverter.

4. The power line communication routing system in claim 2, wherein the DC-to-AC converter (3) comprising:
- a conversion module (32) connected to the solar panel (2) and the power line (4), and configured to receive a DC power generated from the solar panel (2), convert the DC power into the AC power, and output the AC power through the power line (4);
- a microprocessor (33) electrically connected to the conversion module (32) and the solar panel (2), and configured to receive the request transmitted from the power line (4), inquire the relevant data of the solar panel (2) according to the received request, and reply the inquired data to the data collection apparatus (6) through the power line (4); and
- a DC-to-DC step-up module (31) electrically connected between the solar panel (2) and the conversion module (32), and configured to receive the DC power generated from the solar panel (2), boost the DC power, and output the boosted DC power to the conversion module (32).

5. The power line communication routing system in claim 4, wherein the data collection apparatus (6) comprising:
- a signal transmission unit (61) connected to the power line (4), and configured to transmit the request and receive the data replied from the micro inverters (1);
- a microcontroller unit (62) electrically connected to the signal transmission unit (61), and configured to control the data collection apparatus (6) producing and submitting the request and process the data received by the signal transmission unit (61); and
- a memory (64) electrically connected to the microcontroller unit (62), and configured to store the data replied from the micro inverters (1).

6. The power line communication routing system in claim 5, wherein the memory (64) has an embedded web (641) configured to receive the login information of the administrator and register the micro inverters (1), and the data collection apparatus (6) is configured to produce a register table (T1) according to the registered results and store the register table (T1) in the memory (64).

7. The power line communication routing system in claim 6, wherein the data collection apparatus (6) is configured to transmit the register table (T1) to the micro inverters (1) and store the register table (T1) in the micro inverters (1) through the power line (4), and the second-type micro inverter is configured to inquire the information of the first-type micro inverter according to the register table (T1) and submit the request instead of the firs-type micro inverter.

8. The power line communication routing system in claim 6, wherein the data collection apparatus (6) is configured to record the information of the first-type micro inverter and produce a non-response list (642), wherein the non-response list (642) is stored in the memory (64), and the data collection apparatus (6) is configured to inquire the non-response list (642) to judge which micro inverters (1) are the first-type micro inverter when the data collection apparatus (6) is configured to submit the request.

9. A method of operating a power line communication routing system applied in a building, a power line (4), a plurality of micro inverters (1), and a data collection apparatus (6) installed in a building, wherein each micro inverter (1) comprises a solar panel (2) and a DC-to-AC converter (3) connected to the solar panel (2), and the micro inverters (1) are connected to the data collection apparatus (6) through the power line (4); the method comprising following steps:
(a) submitting a connection request to one of the micro inverters (1) by the data collection apparatus (6) through the power line (4);
(b) judging whether a response transmitted from the micro inverter (1) is received by the data collection apparatus (6) within a predetermined time;
(c) regarding the micro inverter (1) as a first-type micro inverter when the data collection apparatus (6) does not receive the response;
(d) communicating with a second-type micro inverter of the micro inverters (1) and commanding the second-type micro inverter to submit the connection request instead of the first-type micro inverter after the step (c); wherein the second-type micro inverter has responded the connection request submitted from the data collection apparatus (6);
(e) receiving the response transmitted from the first-type micro inverter by the second-type micro inverter; and
(f) transmitting the response to the data collection apparatus (6) by the second-type micro inverter.

10. The method of operating the power line communication routing system in claim 9, further comprising:
(g) recording the information of the first-type micro inverter in a non-response list (642) after the step (c), wherein the non-response list (642) is stored in a memory (64) of the data collection apparatus (6).

11. The method of operating the power line communication routing system in claim 10, further comprising:
(h) submitting a data request to one of the micro inverters (1) by the data collection apparatus (6) through the power line (4);
(i) judging whether the micro inverter (1) is the second-type micro inverter;;
(j) directly receiving the data replied from the second-type micro inverter by the data collection apparatus (6) through the power line (4) when the micro inverter (1) is the second-type micro inverter;
(k) communicating with the second-type micro inverter by the data collection apparatus (6) and commanding the second-type micro inverter to submit the data request instead of the first-type micro inverter when the micro inverter (1) is the first-type micro inverter;
(1) receiving the data replied from the first-type micro inverter by the second-type micro inverter through the power line (4); and
(m) transmitting the data to the data collection apparatus (6) by the second-type micro inverter.

12. The method of operating the power line communication routing system in claim 11, wherein the data collection apparatus (6) is configured to judge whether the micro inverter (1) is the second-type micro inverter or the first-type micro inverter by inquiring the non-response list (642) in step (i).

13. The method of operating the power line communication routing system in claim 12, wherein before the step (a) comprising following steps:
(a01) installing a plurality of micro inverters (1) in the building;
(a02) registering the micro inverters (1) to the data collection apparatus (6) according to the information of the micro inverters (1);
(a03) establishing a register table (T1) by the data collection apparatus (6) according to the registered results; and
(a04) transmitting the register table (T1) to the micro inverters (1) and storing the register table (T1) in the micro inverters (1) by the data collection apparatus (6) through the power line (4); wherein in the steps (e) and (m), the second-type micro inverter is configured to inquire the information of the first-type micro inverter according to the register table (T1), and submit the inquiry and request instead of the firs-type micro inverter.

14. A power line communication routing system comprising:
- a power line (4);
- two solar panels (2) configured to receive external light sources and generate electricity;
- two DC-to-AC converters (3) connected to the two solar panels (2) to form two micro inverters (1), the two micro inverters (1) connected to the power line (4) via the DC-to-AC converters (3) to output AC powers through the power line (4); and
- a data collection apparatus (6) connected to the power line (4), and connected to the two micro inverters (1) through the power line (4) and configured to submit a request to the two micro inverters (1) and receive the data replied from the two micro inverters (1);
- wherein the two micro inverters (1) include a first-type micro inverter and a second-type micro inverter; the second-type micro inverter is the micro inverter (1) that can normally reply the request within the determined time, and the first-type micro inverter is that micro inverter (1) that cannot reply the request within the determined time; the data collection apparatus (6) is configured to command the second-type micro inverter to submit the request instead of the first-type micro inverter when the data collection apparatus (6) is configured to collect the data of the first-type micro inverter; the second-type micro inverter is configured to submit the request to the first-type micro inverter, receive the data replied from the first-type micro inverter, and transmit the received data to the data collection apparatus (6) through the power line (4).

15. The power line communication routing system in claim 14, wherein the data collection apparatus (6) has a memory (64) and the memory (64) has an embedded web (641); the embedded web (641) is configured to receive the login information of the administrator and register the two micro inverters (1); the data collection apparatus (6) is configured to produce a register table (T1) according to the registered results and store the register table (T1) in the memory (64); the data collection apparatus (6) is configured to transmit the register table (T1) to the two micro inverters (1) and store the register table (T1) in the two micro inverters (1) through the power line (4); the second-type micro inverter is configured to inquire the information of the first-type micro inverter according to the register table (T1) and submit the request instead of the first-type micro inverter.
